# EUROPEAN PATENT SPECIFICATION

(11) **EP 2 878 490 B1**
(45) Date of publication and mention of the grant of the patent: **10.01.2018**
(21) Application number: 14192959.6
(22) Date of filing: 13.11.2014
(51) Int. Cl.: B60R 13/04

(54) **Protection element for a vehicle body**
Schutzelement für eine Fahrzeugkarosserie
Elément de protection pour la carrosserie d'un véhicule

(30) Priority: 25.11.2013 IT MI20130411 U
(43) Date of publication of application: 03.06.2015
(73) Proprietor: Seristampa S.R.L., 21020 Barasso (Varese) (IT)
(72) Inventor: Fusco, Flavio, 21020 BARASSO (VARESE) (IT)
(74) Representative: Vittorangeli, Lucia

(56) References cited:
- GB-A- 2 097 710
- US-A- 5 286 536
- US-A1- 2012 148 779

## Description

The object of the present invention is a protection element for a vehicle body.

In particular, this device finds specific application as a device for covering and protecting protruding parts of the body of vehicles, particularly the body of motor vehicles.

Side rear-view mirrors or handles are more likely to undergo impact or be scratched. Side portions of the body, such as the doors, can also often be slightly damaged, scratched or dented, for example owing to uncontrolled opening of one's door or the door of an adjacent vehicle.

In fact, when opened carelessly, the door can bang against a wall or other nearby elements, such as other automobiles parked alongside, and thus one risks damaging the side edge of the door and/or the flank of motor vehicles parked alongside.

C-section strips of rubber are currently realized to limit the damage produced in such circumstances. They are fitted on the edge of the doors by frictional engagement or attached thereto by means of an adhesive strip. This rubber trim creates a protective buffer that prevents scratches on the edge of one's own door and damage to the flanks of adjacent automobiles. However, this does not prevent damage to the flanks, bumpers, handles, mirrors or any other portion of the body of one's own automobile on which the C-shaped rubber strip can be fitted.

Mirrors or handles can also be damaged when manoeuvring through narrow spaces, such as when parking inside particularly small garages or driving through narrow streets delimited by walls or having obstacles present on either side. There is currently no known type of device for the protection of these parts. Therefore, as yet, keeping the body intact, that is, the handles and mirrors, is left to the experience and skill of the driver.

In this context, the technical task of the present invention is to make available a protection element for a vehicle body that is capable of overcoming the above-mentioned drawbacks of the prior art. A protective element according to the preamble of claim 1 is disclosed in document US 5286536, in which is shown a protective strip for automobiles. One surface of the strip is mounted on a portion of an auto and the opposite surface is exposed and subject to impact from an outside source. This kind of strips doesn't preserve the aesthetics of the vehicle and spoil the aerodynamics of the automobiles.

An aim of the present invention is to make available a protection element for a vehicle body that enables the application thereof on any point of the body, particularly on handles and side rear-view mirrors, and enables the prevention of impacts or scratches.

It is also an aim of the present invention to make available a protection element for a vehicle body that is easy to apply, that proves to be inconspicuous without altering the aesthetic appearance of the automobile, or, vice versa, and that can be customized and constitute a decorative element on the automobile.

These and other aims are substantially achieved by a protection element for a vehicle body according to that which is recited in one or more of the appended claims.

Further characteristics and advantages will be made more apparent in the detailed description of a preferred but not exclusive embodiment of a protection element for a vehicle body according to the invention.

This description is provided referring to the attached figures, which are also provided solely by way of example and are thus non-limiting, and of which:

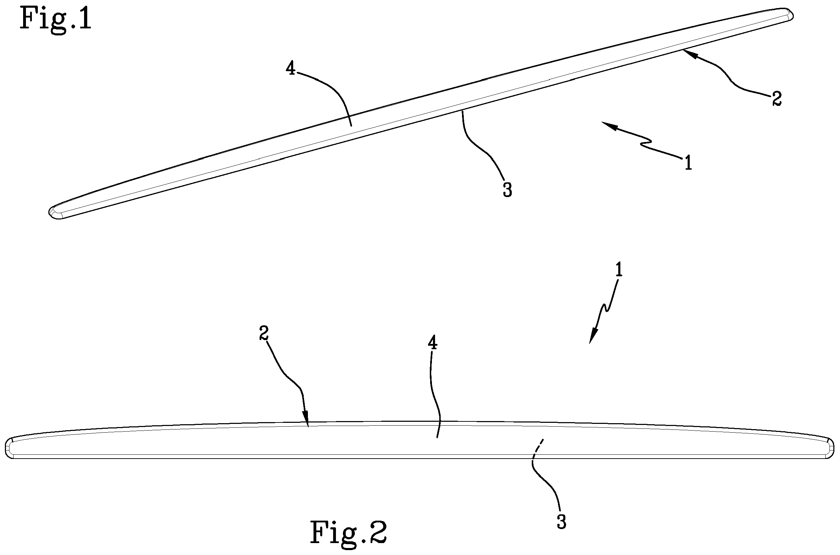

- Figure 1 is a perspective view of a protection element for a vehicle body, in accordance with the present invention;
- Figure 2 is a plan view of the protection element for a vehicle body illustrated in Figure 1;

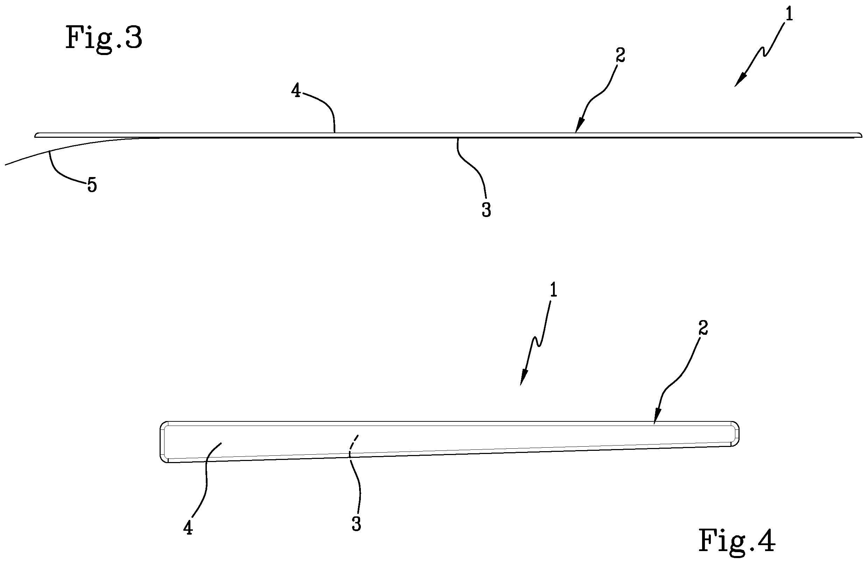

- Figure 3 is a side view of the protection element for a vehicle body illustrated in Figure 1;
- Figure 4 is a plan view of a variant of the protection element for a vehicle body constituting the object of this invention.

With reference to the attached figures, a protection element for a vehicle body according to the present invention is indicated in its entirety by the number 1.

The element 1 constituting the object of the present invention comprises a body 2 made of a polymeric material, which is preferably shock-resistant, and having a substantially planar extension.

The element 1 preferably comprises an adhesive surface 3 and an opposite contact surface 4 that is preferably rounded.

The adhesive surface 3 can be coupled with a removable backing 5 apt for protecting the adhesive layer prior to application of the element on an automobile.

The polymeric material is preferably a polyurethane or PVC that is resistant to UV rays, shocks and scratches, and it is resilient.

Advantageously, once the protection element 1 is applied to the body of the automobile, it remains in place, but if necessary, it can be removed without damaging the automobile.

In accordance with a preferred version, the element is made in a transparent colour so as to protect the body without altering the aesthetic appearance thereof. However, customization is also possible with writing, logos or colours to decorate the automobile, while also preserving its integrity at the same time.

The element 1 can be of various shapes, but it preferably has an elongate shape with a principal direction of extension, with thinner ends and the central part being more rounded in width and in thickness, or shaped like a trapezium, undulated or crescent-shaped. However, other geometric or creative shapes are not excluded.

Advantageously, the length of the element 1 ranges between 50 and 300 mm, preferably between 100 and 200 mm and the thickness ranges between 0.8 and 5 mm.

The thickness of the perimeter edge of the body 2 can gradually decrease outwards, down to zero, to create surface continuity between the body and the element itself, so as to support the aerodynamic properties of the vehicle, preventing local turbulence phenomena.

However, the protection element 1 can also be realized according to different shapes and dimensions according to the protection needs at hand.

In fact, the element 1 is a covering that is applicable to flat and/or convex and/or concave parts of the body of a vehicle. It is thus preferably designed to be arranged on surface areas and not on edges or corners, and it is apt for defining a raised part of the surface on which it is applied.

In general, this device is applicable on the most protuberant parts of the body or those outermost parts that continue to protrude not only when the doors are closed, but also when one or more doors are open.

Alternatively, this element can be applied also to concave or slightly concave areas of the body of a vehicle. In such positions, the element mainly serves to conceal scratches or small dents.

Preferably, this protection element can be applied onto the handles or side rear-view mirrors, advantageously on the most protuberant point with the mirror closed or opened, but also on flat or concave areas.

It can easily be applied to the door area parallel to the vertical edge delimiting the door itself, so as to prevent scratches on that edge when the door is being opened, or to the door area in a horizontal direction overlapping the most protuberant part of the flank of the automobile, so as to prevent dents caused by accidental impact from the doors of adjacent vehicles.

Not least in importance, the protection element can be positioned as a covering over any point of the bumpers or on the rear of the automobile in the boot area.

A further, significant advantage of the protection element constituting the object of this invention is also that it covers small scratches or similar marks existing on the vehicle, thus making it possible to defer body-shop work.

When positioned at very precise points, the protection element constituting the object of the invention can also function actively not only when the vehicle is stopped, but also when it is moving.

To be more specific, it can function as a vibration damper for vibrations produced by the air stream incident on the vehicle, as a reducer of wind noise which is capable of increasing passenger comfort inside the vehicle by reducing the noise produced by the air, or even as an aerodynamic appendage that is capable of changing the external lines of the vehicle and thus controlling the turbulence thereof.

This invention makes it possible to protect points of the body of a vehicle that are particularly exposed, in an effective manner.

It can be easily applied in any position.

The protection element can protect the vehicle in an inconspicuous manner without altering the aesthetic lines thereof, or, if suitably treated, it can also decorate the vehicle.

The protection element is also capable of realizing an aerodynamic appendage for controlling turbulence and the noise level of the vehicle.

## Claims

1. A protection element for a vehicle body, comprising a body (2) made of shock-resistant polymeric material and having a substantially planar extension, said body (2) having an adhesive surface (3) on one side, directly applied on it, and an abutment surface (4) on the other side, opposite said adhesive surface (3), defining a raised part of the surface whereon it is applied; said protection element being transparent and applicable on the surface of a vehicle body, on side rear view mirrors, door handles, doors and bumpers; **characterized in that** said body (2) presents a perimeter edge whose thickness gradually decreases outwards, down to zero, to create surface continuity between the body and the element itself.

2. The element according to one of the preceding claim, **characterized in that** said polymeric material consists of polyurethane or PVC that is resistant to UV rays, shocks and scratches, and it is resilient.

3. The element according to one of the preceding claims, **characterized in that** it is removable.

4. The element according to one of the preceding claims, **characterized in that** it is elongate in shape, shaped like a trapezium, undulated or crescent-shaped.

5. The element according to the preceding claim, **characterized in that** it is of a length ranging between 50 and 250 mm, preferably between 100 and 200 mm.

6. The element according to one of the preceding claims, **characterized in that** it is of a thickness ranging between 0.8 and 5 mm.

7. The element according to one of the preceding claims, **characterized in that** it can be customized.

8. The element according to one of the preceding claims, **characterized in that** said adhesive surface can be coupled with a backing apt for protecting the adhesive layer prior to use/application of the element.

9. Use of a protection element for a vehicle body according to one or more of claims from 1 to 8 for protecting the surface of a vehicle body on side rear view mirrors, door handles, doors and bumpers.

## Patentansprüche

1. Schutzelement für eine Fahrzeugkarosserie, umfassend einen Körper (2), bestehend aus stoßfestem Polymermaterial und aufweisend eine im Wesentlichen ebenflächige Ausdehnung, wobei der Körper (2) eine haftende Oberfläche (3) auf einer Seite aufweist, die direkt auf ihm angebracht ist, und eine Anschlagsoberfläche (4) auf der anderen Seite, die gegenständig zur haftenden Oberfläche (3) angeordnet ist, definierend einen erhabenen Teil der Oberfläche, auf der sie angebracht ist, wobei das Schutzelement transparent ist und auf der Oberfläche einer Fahrzeugkarosserie an seitlichen Rückspiegeln, Türgriffen, Türen und Stoßdämpfern angebracht werden kann, **dadurch gekennzeichnet, dass** der Körper (2) eine Umfangskante aufweist, deren Dicke stufenweise nach außen bis null abnimmt, um eine Oberflächenkontinuität zwischen der Karosserie und dem Element zu bilden.

2. Element nach dem vorhergehenden Anspruch, **dadurch gekennzeichnet, dass** das Polymermaterial aus Polyurethan oder PVC besteht, das gegen UV-Strahlen, Stöße und Kratzer beständig und nachgiebig ist.

3. Element nach einem der vorhergehenden Ansprüche, **dadurch gekennzeichnet, dass** es entfernbar ist.

4. Element nach einem der vorhergehenden Ansprüche, **dadurch gekennzeichnet, dass** es eine langgestreckte Form aufweist, geformt wie ein Trapez, gewellt oder halbmondförmig.

5. Element nach dem vorhergehenden Anspruch, **dadurch gekennzeichnet, dass** es eine Länge zwischen 50 und 250 mm aufweist, vorzugsweise zwischen 100 und 200 mm.

6. Element nach einem der vorhergehenden Ansprüche, **dadurch gekennzeichnet, dass** es eine Dicke zwischen 0,8 und 5 mm aufweist.

7. Element nach einem der vorhergehenden Ansprüche, **dadurch gekennzeichnet, dass** es individualisierbar ist.

8. Element nach einem der vorhergehenden Ansprüche, **dadurch gekennzeichnet, dass** die haftende Oberfläche mit einem Träger gekuppelt werden kann, der geeignet ist, um die Klebeschicht vor der Nutzung/Anbringung des Elements zu schützen.

9. Verwendung eines Schutzelements für eine Fahrzeugkarosserie nach einem oder mehreren der Ansprüche 1 bis 8 zum Schutz der Oberfläche einer Fahrzeugkarossiere an seitlichen Rückspiegeln, Türgriffen, Türen und Stoßdämpfern.

## Revendications

1. Élément de protection pour la carrosserie d'un véhicule, comprenant un corps (2) constitué d'un matériau polymérisé résistant aux chocs et ayant une extension substantiellement planaire, ledit corps (2) comportant une surface adhésive (3) sur un côté, directement appliquée sur celui-ci, et une surface de buté (4) sur l'autre côté, opposée à ladite surface adhésive (3), définissant une partie surélevée de la surface où elle est appliquée ; ledit élément de protection étant transparent et applicable sur la surface de la carrosserie d'un véhicule, sur les rétroviseurs latéraux, les poignées de portière, les portières et les pare-chocs ; **caractérisé en ce que** ledit corps (2) présente un bord périphérique dont l'épaisseur décroit graduellement vers l'extérieur, jusqu'à zéro, pour créer une continuité de surface entre le corps et l'élément lui-même.

2. Élément selon la revendication précédente, **caractérisé en ce que** ledit matériau polymérisé consiste en du polyuréthane ou PVC étant résistant aux rayons UV, aux chocs et aux éraflures et étant résilient.

3. Élément selon l'une des revendications précédentes, **caractérisé en ce qu'**il est amovible.

4. Élément selon l'une des revendications précédentes, **caractérisé en ce qu'**il possède une forme allongée, façonnée comme un trapèze ayant une forme ondulée ou de croissant.

5. Élément selon la revendication précédente, **caractérisé en ce qu'**il possède une longueur comprise entre 50 et 250 mm, de préférence entre 100 et 200 mm.

6. Élément selon l'une des revendications précédentes, **caractérisé en ce qu'**il possède une épaisseur comprise entre 0,8 et 5 mm.

7. Élément selon l'une des revendications précédentes, **caractérisé en ce qu'**il peut être personnalisé.

8. Élément selon l'une des revendications précédentes, **caractérisé en ce que** ladite surface adhésive peut être couplée à un support en mesure de protéger la couche adhésive avant l'utilisation/l'application de l'élément.

9. Utilisation d'un élément de protection pour la carrosserie d'un véhicule, selon l'une ou plusieurs des revendications de 1 à 8, servant à protéger la surface de la carrosserie d'un véhicule sur les rétroviseurs latéraux, les poignées de portière, les portières et les pare-chocs.
